# EUROPÄISCHE PATENTSCHRIFT

(11) **EP 1 920 993 B1**
(45) Veröffentlichungstag und Bekanntmachung des Hinweises auf die Patenterteilung: **20.04.2011**
(21) Anmeldenummer: 07120322.8
(22) Anmeldetag: 09.11.2007
(51) Int. Cl.: B62D 5/04

(54) **Kugelgewindetrieb**
Ball screw
Vis d'entraînement à bille

(30) Priorität: 11.11.2006 DE 102006053244
(43) Veröffentlichungstag der Anmeldung: 14.05.2008
(73) Patentinhaber: Schaeffler Technologies GmbH & Co. KG, 91074 Herzogenaurach (DE)
(72) Erfinder: Osterlänger, Jürgen, 91448 Emskirchen (DE); Kraus, Manfred, 91074 Herzogenaurach (DE)

(56) Entgegenhaltungen:
- WO-A-01/20178
- WO-A-01/44037
- DE-A1- 3 735 517
- US-B1- 6 499 369

## Beschreibung

Die vorliegende Erfindung betrifft einen Kugelgewindetrieb. Kugelgewindetriebe wandeln rotatorische in translatorische Bewegungen um. Sie werden zunehmend im Bereich der Automobilindustrie beispielsweise bei so genannten Linearaktuatoren eingesetzt. Elektromotorisch betriebene Kugelgewindetriebe werden zunehmend auch als Lenkunterstützung in der Lenkeinrichtung von Kraftfahrzeugen eingesetzt.

Aus WO 01/44037 A1 ist ein Kugelgewindetrieb bekannt geworden, bei dem eine von einem Motor angetriebene Spindelmutter über ein Kugellager axial und radial an einem Gehäuse gelagert ist. Kugellager sind spielbehaftet. Das bedeutet, dass ein geringfügiges Spiel des Außenrings gegenüber dem Innenring des Kugellagers in den axialen Richtungen vorliegt. Wenn über schnelle Lenkbewegungen - gemeint ist hier ein schnelles Hin- und Herbewegen des Lenkrades - leichte oszillierende Bewegungen der mit der Spindel einstückig ausgeführten Schubstange erfolgen, werden diese schnellen oszillierenden Bewegungen über die Spindelmutter und das Kugellager in das Gehäuse eingeleitet. Aufgrund des oben erwähnten axialen Spiels zwischen dem Außenring und dem Innenring des Kugellagers können sich unerwünschte Klappergeräusche einstellen, die auch als Umkehrklacken bezeichnet werden. Dieses Umkehrklacken wird als störend empfunden.

Aus US 6,499,369 B1 ist ein Kugelgewindetrieb nach den Merkmalen des Oberbegriffs des Anspruchs 1 bekannt geworden.

Aufgabe der vorliegenden Erfindung war es, eine Alternative zu dem bekannten Kugelgewindetrieb anzugeben.

Erfindungsgemäß wird diese Aufgabe durch den Kugelgewindetrieb gemäß Anspruch 1 gelöst.

Dadurch, dass ein axial vorgespanntes Federelement für eine axiale Vorspannung der Spindelmutter gegenüber dem Gehäuse vorgesehen ist, können die leichten oszillierenden Bewegungen der Schubstange elastisch über das vorgespannte Federelement aufgefangen werden. Der Außenring des Wälzlagers, insbesondere des Kugellagers kann lösbar oder unlösbar fest mit dem Gehäuse verbunden sein und somit ein gehäusefestes Teil bilden. Das Federelement kann einerseits an dem Gehäuse oder an einem gehäusefesten Teil abgestützt und axial gegen die Spindelmutter angefedert sein. In dieser Einbaulage bewirkt die axiale Kraftkomponente des vorgespannten Federelementes, dass die Kugeln des Kugellagers an die einen Gewindeflanken der Kugelrillen der Spindelmutter und des Außenringes angedrückt werden. Diese axiale Kraftkomponente wird daher über die Kugeln auf den Außenring des Kugellagers übertragen, wobei die Kugeln an diagonal gegenüberliegend angeordnete Gewindeflanke der Kugelrille des Außenringes und der Kugelrille des innenringes oder der Spindelmutter angedrückt werden. Wenn nun leichte oszillierende Bewegungen der Schubstange und somit auch der Spindel erfolgen, müssen diese sehr geringen Hubbewegungen gegen die Federkraft des axial vorgespannten Federelementes durchgeführt werden. Der Federweg und die Federrate des vorgespannten Federelementes ist dabei so groß bemessen, dass sie die axialen oszillierenden Bewegungen der Schubstange problemlos aufnehmen können. Größere Lenkbewegungen, bei denen deutlich höhere Kräfte auf die Schubstange ausgeübt werden, überwinden zwar die Vorspannung des vorgespannten Federelementes, jedoch wird der Lastwechsel innerhalb des Kugellagers von der eine Flanke der Kugelrille auf die andere Flanke der Kugelrille mangels oszillierender Bewegung nicht als störend empfunden.

Zur Minimierung von unerwünschter Reibung zwischen der Spindelmutter und dem Gehäuse ist erfingdungsgemäß vorgesehen, dass das Federelement über ein Axiallager an der Spindelmutter abgestützt ist. Vorzugsweise kann eine Lagerfläche des Axiallagers ummittelbar an der Stirnseite der Spindelmutter ausgebildet sein. Die andere Lagerfläche des Axiallagers kann vorzugsweise direkt an dem Federelement ausgebildet sein.

Dieses Axiallager kann schwach dimensioniert sein, da es lediglich Kräfte aufnimmt, die innerhalb der Federkraft des axial vorgespannten Federelementes liegen.

Das Axiallager ist vorzugsweise durch ein Wälzlager gebildet, dessen Wälzkörper einerseits an der der Spindelmutter zugeordneten Lagerfläche und andererseits an einer dem Federelement zugeordneten Lagerfläche abwälzen.

Vorzugsweise ist das Kugellager als Vierpunktlager mit geringer Radialluft ausgeführt.

Es hat sich gezeigt, dass insbesondere ein Federelement mit einem tellerförmigen Federabschnitt günstige Federeigenschaften aufweist, wobei dieser tellerförmige Federabschnitt an dem Gehäuse abgestützt sein kann. An diesem tellerförmigen Federabschnitt kann vorzugsweise einstückig ein Hülsenabschnitt angeschlossen sein, der in die Spindelmutter eingreift, wobei das Federelement und die Spindelmutter verliersicher miteinander verbunden sind. Die Spindelmutter ist ohnehin mit einer Durchgangsöffnung versehen, wobei am Innenumfang dieser Durchgangsöffnung Kugelrillen zum Abwälzen der Kugeln ausgebildet sind. Beispielsweise kann nun an dem dem Federelement zugewandten stirnseitigen Ende der Spindelmutter am Innenumfang eine umlaufende Nut ausgebildet sein. Der Hülsenabschnitt des Federelementes kann dann mit einem radial vorspringenden Wulst oder mit mehreren über den Umfang verteilt angeordneten Nasen in diese Nut eingreifen. Dieser Wulst oder die Nasen und/oder der Hülsenabschnitt des Federelementes können dabei derart federelastisch ausgebildet sein, dass beim Einführen des Hülsenabschnittes in die zentrale Öffnung der Spindelmutter der Wulst oder die Nasen unter federelastischer Aufweitung in die Nut der Spindelmutter einschnappen. Auf diese Weise ist sichergestellt, dass das Federelement verliersicher mit der Spindelmutter verbunden ist.

Der tellerförmige Federabschnitt des Federelementes weist vorzugsweise an seiner der Spindelmutter zugewandten Stirnseite eine Kugelrille für Kugeln auf. In diesem Fall bietet es sich an, wenn die Spindelmutter an ihrer dem tellerförmigen Federabschnitt zugewandten Stirnseite mit einer weiteren Kugelrille versehen ist, so dass Kugeln an den beiden Kugelrillen der Spindelmutter und des tellerförmigen Federabschnitt abwälzen können. Wenn der erfindungsgemäße Kugelgewindetrieb im Gehäuse angeordnet ist, wälzen die Kugeln dieses so gebildeten Axialkugellagers an den Kugelrillen der Spindelmutter und des Federelementes ab.

Besonders günstige Ergebnisse wurden hinsichtlich unerwünschter Geräuschbildung erzielt, wenn der tellerförmige Federabschnitt des Federelementes an seinem freien Ende - also am Außenumfang - in Richtung auf das Gehäuse konvex gewölbt ist. Auf diese Weise ist sichergestellt, dass das Federelement im Bereich der konvexen Wölbung in Kontakt kommt mit dem Gehäuse. Kantenberührungen oder Eingrabungen in das Gehäuse sind somit ausgeschlossen.

Während mit dem erfindungsgemäßen Kugelgewindetrieb sichergestellt ist, dass unerwünschte Klackergeräusche im Vierpunktlager ausgeschlossen sind, kann sich jedoch als weitere unerwünschte Geräuschquelle ein weiteres Umkehrklacken der Kugeln des Kugelgewindetriebes einstellen. Zur Vermeidung dieses unerwünschten weiteren Umkehrklackerns wird demzufolge bei einer erfindungsgemäßen Weiterbildung vorgeschlagen, dass mehrere Kugelkanäle vorgesehen sind, wobei die Kugeln wenigstens eines der Kugelkanäle gegen die eine Gewindeflanke der schraubenförmigen Kugelrille der Spindel angedrückt sind, und wobei die Kugeln wenigstens eines anderen Kugelkanals gegen die andere Gewindeflanke der schraubenförmigen Kugelrille der Spindel angedrückt sind. Wenn keine äußeren Kräfte an dem Kugelgewindetrieb angreifen, werden demzufolge die Kugeln des Kugelgewindetriebes ständig unter leichter Vorspannung gegen die Gewindeflanken der schraubenförmigen Kugelrille der Spindel federelastisch angedrückt. Die federelastischen Wege sind dabei so bemessen, dass die bereits oben erwähnten leichten oszillierenden Bewegungen der Spindel innerhalb dieses elastischen Federweges liegen.

Um eine einwandfreie Federelastische Andrückung der Kugeln gegen die jeweiligen Kugelrillen der Spindel zu gewährleisten, kann es zweckmäßig sein, wenn ein hier als Hilfs-Kugelgewindetrieb bezeichneter Gewindetrieb vorgesehen wird. Dieser Hilfs-Kugelgewindetrieb umfasst dann lediglich eine weitere Spindelmutter, die jedoch deutlich schwächer ausgelegt sein kann als die eingangs erwähnte Spindelmutter. Zwischen diesen beiden Spindelmuttern kann beispielsweise eine axial wirkende Feder vorgesehen sein, so dass die beiden Spindelmuttern axial gegeneinander vorgespannt sind. Die Federkräfte werden über die Kugeln des Kugelgewindetriebs und die Kugeln des Hilfs-Kugelgewindetriebs in die Spindel eingeleitet.

Nachstehend wird die Erfindung anhand von drei in insgesamt sieben Figuren abgebildeten Ausführungsbeispielen näher erläutert. Es zeigen:
- Figur 1: einen erfindungsgemäßen Kugelgewindetrieb in perspektivischer Darstellung,
- Figur 2: einen Längsschnitt durch den Kugelgewindetrieb aus Figur 1,
- Figur 3: eine Einzelheit aus Figur 2 in vergrößerter Darstellung,
- Figur 4: eine weitere Einzelheit aus Figur 1 in vergrößerter Darstellung,
- Figur 5: einen modifizierten Kugelgewindetrieb in einer Darstellung wie in Figur 3, jedoch unterhalb der Spindelachse,
- Figur 6: einen Längsschnitt durch einen weiteren erfindungsgemäßen Kugelgewindetrieb und
- Figur 7: eine Einzelheit aus Figur 6 in vergrößerter Darstellung.

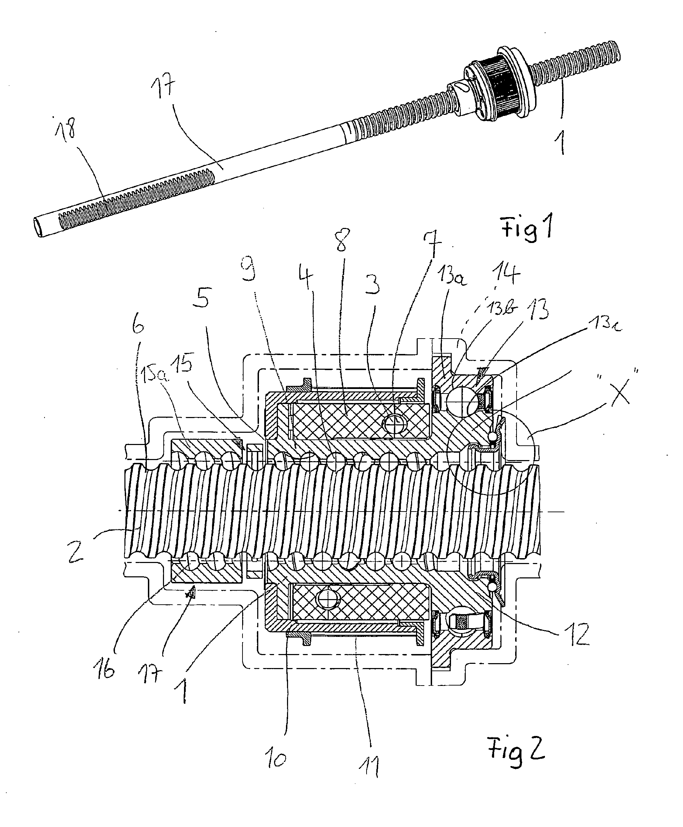

Figur 1 zeigt in perspektivischer Darstellung einen erfindungsgemäßen Kugelgewindetrieb. Dessen Einzelheiten sind deutlich in der Figur 2 abgebildet, die einen Längsschnitt in vergrößerter Darstellung durch den Kugelgewindetrieb zeigt. Eine Spindelmutter 1 ist auf einer Spindel 2 drehbar angeordnet. In bekannter Weise laufen Kugeln 3 in endlosen Kugelkanälen 4 um. Die Kugelkanäle 4 sind begrenzt von der Spindelmutter 1 und der Spindel 2. Die Spindelmutter 1 weist an ihrem Innenumfang schraubenförmig gewundene Kugelrillen 5 auf. Die Spindel 2 weist an ihrem Außenumfang ebenfalls eine schraubenförmig gewundene Kugelrille 6 auf. Umlenkkanäle 7 verbinden Anfang und Ende eines endlosen Kugelkanals 4. Diese Umlenkkanäle 7 sind vorliegend an einem aus Kunststoff gebildeten Umlenkstück 8 ausgebildet.

Die Spindelmutter 1 weist ein aus Stahl gebildetes Mutterteil 9 auf, an dessen Innenumfang die bereits oben erwähnten Kugelrillen 5 ausgebildet sind. Am Außenumfang des Mutterteils 9 ist das Umlenkstück 8 angeordnet. Das Umlenkstück 8 ist umgeben von einer Hülse 10, die fest mit dem Mutterteil 9 verbunden ist. Auf der Hülse 10 ist ein Zahnkranz 11 angeordnet, der von einem hier nicht abgebildeten Zahnriemen umschlungen wird. Ein hier ebenfalls nicht abgebildeter Elektromotor treibt über den Zahnriemen die Spindelmutter 1 an.

Das Mutterteil 9 der Spindelmutter 1 umfasst ferner einen Radialflansch 12, das mit einem Vierpunktkugellager 13 versehen ist. Der Kugelgewindetrieb ist innerhalb eines hier nur gestrichelt angedeuteten Gehäuses 14 angeordnet und über das Vierpunktkugellager 13 an dem Gehäuse 14 gelagert. Vierpunktlager sind sehr gut geeignet zur Übertragung von vorwiegend axialen Kräften, wobei jedoch auch radiale Kräfte aufgenommen werden können.

Der Figur 2 ist ferner zu entnehmen, dass neben dem oben beschriebenen Kugelgewindetrieb auf der Spindel 2 ein Hilfs-Kugelgewindetrieb 15 mit einer zweiten Spindelmutter 15a angeordnet ist, in der ebenfalls nicht weiter abgebildete Kugeln in endlosen Kugelkanälen 16 umwälzen. Die Spindelmutter 15a ist an der Spindelmutter 1 axial federnd abgestützt. Auf diese Weise sind die Kugeln in beiden Kugelgewindetrieben in ihren endlosen Kugelkanälen 4, 16 gegeneinander aufgrund der Anfederung zwischen den beiden Spindelmuttern 1, 15a leicht vorgespannt. Diese Anordnung bietet den Vorteil, dass die Kugeln 3 in den endlosen Kugelkanälen 4, 16 ohne Klappergeräusche umlaufen.

Vorliegend ist die Spindel 1 einstückig mit einer Schubstange 17 ausgebildet, an der ein Zahnstangenprofil 18 vorgesehen ist. Die Schubstange 17 ist Teil einer Lenkeinrichtung für Kraftfahrzeuge, wobei eine hier nicht abgebildete Lenkspindel mit dem Zahnstangenprofil 18 der Schubstange 17 kämmt. Der auf der Spindel 2 angeordnete Kugelgewindetrieb wird für eine elektromechanische Lenkunterstützung eingesetzt.

Bei kurzen oszillierenden Bewegungen der Schubstange 17 ist ein so genanntes Umkehrklackern der Kugeln 3 in den Kugelkanälen 4, 16 aufgrund der gegenseitigen elastischen Verspannung der beiden Spindelmuttern - wie sie oben beschrieben wurde - ausgeschlossen.

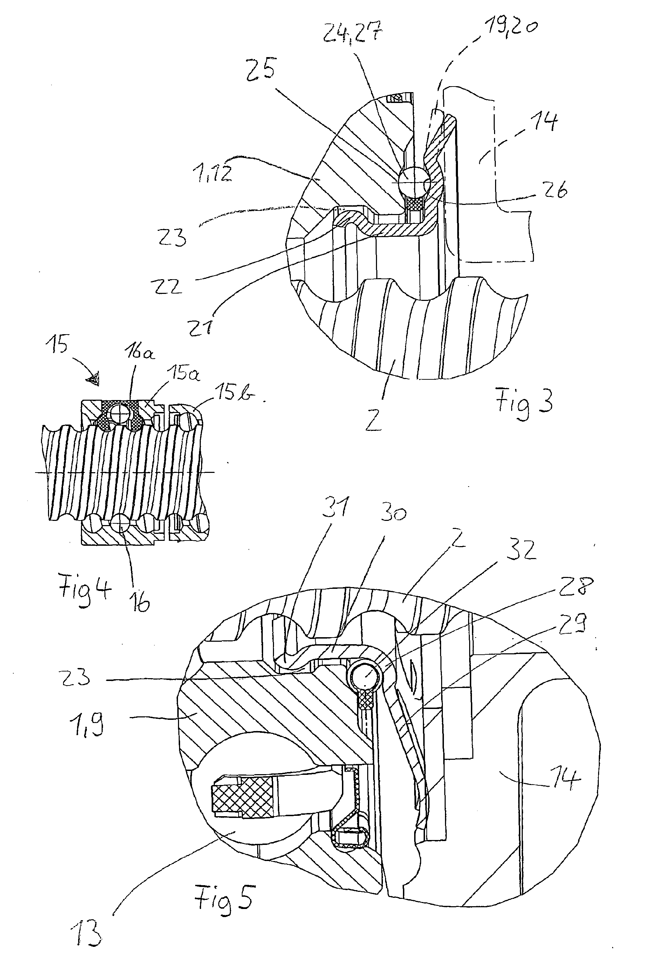

Figur 4 zeigt den Hilfs-Kugelgewindetrieb 15 als einzelnes Element. Deutlich ist der endlose Kugelkanal 16 mit dem Umlenkkanal 16a zu erkennen. Die Spindelmutter 15a ist derart geschlitzt, dass ein Endteil 15b der Spindelmutter 15a axial federnd ausgebildet ist. Die Spindelmutter 15a liegt mit ihrem Endteil 15b an der Stirnseite der Spindelmutter 1 an. In dieser Situation besteht eine federnde Vorspannung zwischen der Spindelmutter 15a und der Spindelmutter 1.

Figur 3 zeigt den Teilausschnitt X aus Figur 2 in vergrößerter Darstellung. Teile des Radialflansches 12 der Spindelmutter 1 und der Spindel 2 sind deutlich zu erkennen, ebenfalls ein Teil des gestrichelt dargestellten Gehäuses 14. Zwischen dem Radialflansch 12 und dem Gehäuse 14 ist ein Federelement 19 angeordnet. Dieses Federelement 19 weist einen tellerförmigen Federabschnitt 20 und einen einstückig an den tellerförmigen Federabschnitt 20 anschließenden Hülsenabschnitt 21 auf. Der Hülsenabschnitt 21 weist an seinem freien Ende einen umlaufenden, nach radial außen vorspringenden Wulst 22 auf, der in eine umlaufende Nut 23 eingreift, die am Innenumfang des Mutterteils 9 der Spindelmutter 1 ausgebildet ist. Auf diese Weise ist eine verliersichere Verbindung zwischen dem Federelement 19 und der Spindelmutter 1 gewährleistet. In der Darstellung gemäß Figur 3 ist das Federelement montiert, wobei der umlaufende Wulst 22 zwar in die Nut 23 eingreift, jedoch auf Abstand zu deren Wandungen angeordnet ist.

Das Federelement 19 ist über ein Axialkugellager 24 an der Spindelmutter 1 gelagert. Zu diesem Zweck weist das Mutterteil 9 an seiner dem tellerförmigen Federabschnitt 20 zugewandten Stirnseite eine Kugelrille 25 auf. Ferner ist an dem tellerförmigen Federabschnitt 20 an dessen dem Mutterteil 9 zugewandten Stirnseite eine weitere Kugelrille 26 ausgebildet. Zwischen dem tellerförmigen Federabschnitt 20 und dem Mutterteil 9 angeordnete Kugeln 27 wälzen an diesen Kugelrillen 25, 26 ab. Der tellerförmige Federabschnitt 20 überragt deutlich den Teilkreisdurchmesser des Axialkugellagers 24. Das freie Ende des tellerförmigen Federabschnittes 20 liegt am Gehäuse 14 an. In Figur 3 ist der tellerförmige Federabschnitt 20 in einer unbelasteten Lage schraffiert sowie in seiner belasteten Einbaulage gestrichelt abgebildet. Gestrichelt abgebildet ist die Situation, in der der tellerförmige Federabschnitt 20 montiert ist und mit seinem freien Ende an dem Gehäuse 14 anliegt. Gegenüber der Ausgangslage ist in der Einbausituation der tellerförmige Federabschnitt 20 federgespannt. Das bedeutet, der tellerförmige Federabschnitt 20 übt eine axiale Kraft zwischen dem Gehäuse 14 und der Spindelmutter 1 aus. Diese axiale Kraft wird über das Vierpunkt-Kugellager wieder in das Gehäuse 14 eingeleitet.

Die erfindungsgemäßen Vorteile der Anordnung des Federelementes 19 werden nachstehend erläutert: Kugellager, unter anderem auch das hier verwendete Vierpunkt-Kugellager 13 sind mit einer so genannten Radialluft versehen, was unter anderem bedeutet, dass sich ein geringfügiges axiales Spiel zwischen dem Innenring und Außenring des Kugellagers einstellt. Wenn nun die Schubstange 17 mit geringen Amplituden oszilliert, können diese oszillierenden Bewegungen über die Kugeln 3 des Kugelgewindetriebes auf die Spindelmutter und genauer auf das Mutterteil 9 übertragen werden. Das Mutterteil 9 wird demzufolge ebenfalls angeregt in den axialen Richtungen zu oszillieren. Ohne das erfindungsgemäß angeordnete Federelement würde diese oszillierende Bewegung des Mutterteils 9 aufgrund des erwähnten Axialspiels des Mutterteils 9 gegenüber dem Außenring 13a Klappergeräusche verursachen, die auch als Umkehrklacken bezeichnet werden. Diese Klappergeräusche resultieren daraus, dass die Kugeln des Vierpunkt-Lagers 13 zwischen den Flanken 13b, 13c der Kugelrillen des Vierpunkt-Lagers hin und her verlagert werden. Die erfindungsgemäße Anordnung des Federelementes 19 bewirkt nun, dass die Kugeln des Vierpunkt-Lagers 13 ständig im Kontakt bleiben mit der einen Flanke 13c des Mutterteils 9 und der anderen Flanke 13b des Außenrings 13a. Die Federkraft des Federelementes 19 ist so eingestellt, dass die aufgrund der leichten oszillierenden Bewegungen übertragenen axialen Kräfte federnd aufgefangen werden können.

Figur 5 zeigt einen modifizierten Kugelgewindetrieb, der sich von dem oben beschriebenen erfindungsgemäßen Kugelgewindetrieb im Wesentlichen durch eine geänderte Gestalt und geänderte Anordnung des oben beschriebenen Federelementes 19 unterscheidet. In der Ausschnittsvergrößerung gemäß Figur 5 ist teilweise die Spindel 2 zu erkennen, sowie das Vierpunkt-Kugellager 13. Ebenfalls ist das Gehäuse 14 angedeutet. Ein Federelement 28 weist einen tellerförmigen Federabschnitt 29 und einen einstückig an dem tellerförmigen Federabschnitt 29 anschließenden Hülsenabschnitt 30 auf. Der Hülsenabschnitt 30 ist an seinem freien Ende mit einem radial auswärts gerichteten umlaufenden Wulst 31 versehen, der in die Nut 23 der Spindelmutter 1 eingreift. Das Federelement 28 ist über ein Axialkugellager 32 an der Spindelmutter 1 axial gelagert. Der tellerförmige Federabschnitt 29 liegt mit seinem freien Ende an dem Gehäuse 14 federnd an. Das freie Ende des tellerförmigen Federabschnitts 29 ist an seiner dem Gehäuse 14 zugewandten Seite konvex gewölbt. Aufgrund dieser konvexen Wölbung sind unerwünschte Verkantungen des tellerförmigen Federabschnitts 29 mit dem Gehäuse 14 vermieden. Das Axialkugellager 32 ist bei dieser Variante mit einem reduzierten Teilkreisdurchmesser versehen, also möglichst weit radial innenliegend angeordnet, so dass ein möglichst großer auskragender tellerförmiger Federabschnitt 29 ausgebildet ist. Im Übrigen sind Wirkungen und Struktur der Federelemente und Axiallager von beiden oben beschriebenen Ausführungsbeispielen übereinstimmend.

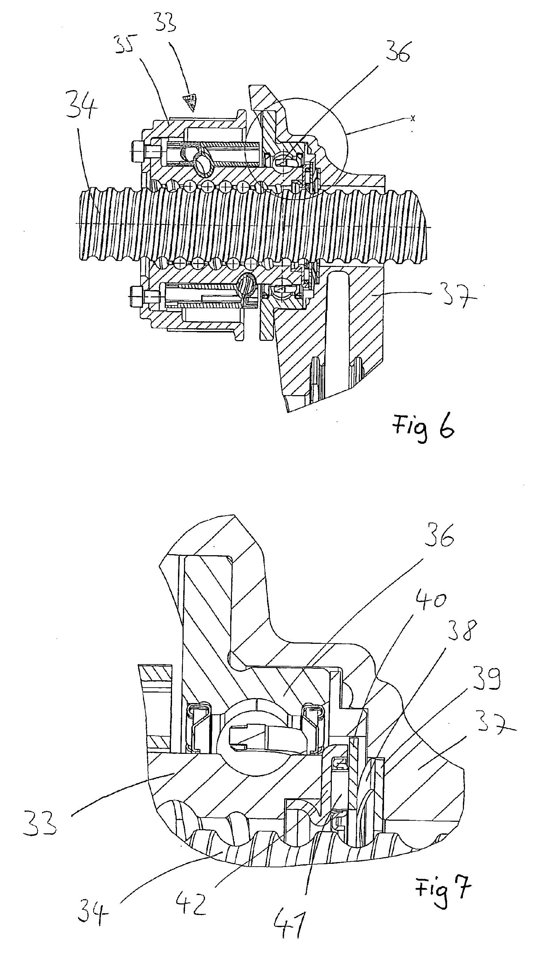

In den Figuren 6 und 7 ist ein weiteres Ausführungsbeispiel eines erfindungsgemäßen Kugelgewindetriebes abgebildet. Eine Spindelmutter 33 ist auf einer Spindel 34 drehbar angeordnet. Die Spindelmutter ist mit einem Zahnkranz 35 versehen, der von einem hier nicht abgebildeten Zahnriemen umschlungen ist. Die Wirkungsweise dieses Kugelgewindetriebes entspricht den oben beschriebenen Ausführungsbeispielen. Die Spindelmutter 33 ist ebenfalls über ein Vierpunkt-Kugellager 36 in einem Gehäuse 37 drehbar gelagert.

Figur 7 zeigt eine Ausschnittsvergrößerung mit einem Teil des Vierpunkt-Kugellagers 36 und einem Federelement 38, das zwischen dem Gehäuse 37 und der Spindelmutter 33 angeordnet ist. Die Wirkungsweise dieses Federelementes 38 stimmt mit der bereits oben beschriebenen Wirkungsweise des Federelementes 19 überein. Bei dem Ausführungsbeispiel gemäß den Figuren 6 und 7 ist das Federelement 38 durch eine Art Wellfeder gebildet, die zwischen zwei Scheiben 39, 40 angeordnet und an beiden Scheiben 39, 40 federnd abgestützt ist. Die Scheibe 39 ist an dem Gehäuse 37 abgestützt. Die Scheibe 40 ist über ein Axialnadellager 41 an der Spindelmutter 33 abgestützt. Die Scheibe 40 ist an ihrer dem Axialradellager 41 zugewanden Seite mit einer Laufbahn für Nadeln des Axialnadellagers 41 versehen. Das Axialnadellager 41 umfasst ferner einen an der Spindelmutter 33 angeordneten Lagerring 42, der ebenfalls mit einer Laufbahn für die Nadeln des Axialnadellagers 41 versehen ist.

Bei den hier beschriebenen erfindungsgemäßen Kugelgewindetrieben sind die Stützlager für die Spindelmutter - hier Vierpunkt-Kugellager 13, 36 - mittels Federelemente federvorgespannt. Im Fall von Vierpunkt-Kugellagern laufen daher die Kugeln leicht vorgespannt im Zweipunkt-Kontakt. Die Axiallager für die Federelemente sind so ausgelegt, dass sie die geringen Lasten aufgrund der Federkräfte der Federelemente übertragen. Unerwünschtes Axialspiel in dem Stützlagern der Spindelmuttern ist reduziert. Unerwünschtes Umkehrklappern in den Stützlagern wird bei den erfindungsgemäßen Kugelgewindetrieben vermieden.

### Bezugszahlenliste

| | | | |
|---|---|---|---|
| 1 | Spindelmutter | 26 | Kugelrille |
| 2 | Spindel | 27 | Kugel |
| 3 | Kugel | 28 | Federelement |
| 4 | Kugelkanal | 29 | tellerförmiger Federabschnitt |
| 5 | Kugelrille | 30 | Hülsenabschnitt |
| 6 | Kugelrille | 31 | Wulst |
| 7 | Umlenkkanäle | 32 | Axiallager |
| 8 | Umlenkstück | 33 | Spindelmutter |
| 9 | Mutterteil | 34 | Spindel |
| 10 | Hülse | 35 | Zahnkranz |
| 11 | Zahnkranz | 36 | Vierpunkt-Kugellager |
| 12 | Radialflansch | 37 | Gehäuse |
| 13 | Vierpunktkugellager | 38 | Federelement |
| 13a | Außenring | 39 | Scheibe |
| 13b | Flanke | 40 | Scheibe |
| 13c | Flanke | 41 | Axialnadellager |
| 14 | Gehäuse | | |
| 15 | Hilfs-Kugelgewindetrieb | | |
| 15a | Spindelmutter | | |
| 15b | Endteil | | |
| 16 | endloser Kugelkanal | | |
| 16a | Umlenkkanal | | |
| 17 | Schubstange | | |
| 18 | Zahnstangenprofil | | |
| 19 | Federelement | | |
| 20 | tellerförmiger Federabschnitt | | |
| 21 | Hülsenabschnitt | | |
| 22 | Wulst | | |
| 23 | Nut | | |
| 24 | Axial kugellager | | |
| 25 | Kugelrille | | |

## Patentansprüche

1. Kugelgewindetrieb, mit einer auf einer Spindel (2, 34) drehbar angeordneten Spindelmutter (1, 33) und mit Kugeln (3), die in endlosen, von der Spindelmutter (1, 33) und der Spindel (2, 34) begrenzten Kugelkanälen (4) umlaufen, und mit einem Wälzlager, insbesondere Kugellager, über das die Spindelmutter (1, 33) an einem Gehäuse (14, 37) axial und radial gelagert ist, wobei ein axial vorgespanntes Federelement (19, 28, 38) für eine axiale Vorspannung der Spindelmutter (1, 33) gegenüber dem Gehäuse (14, 37) oder einem gehäusefesten Teil vorgesehen ist, **dadurch gekennzeichnet, dass** das Federelement (19, 28, 38) über ein Axiallager an der Spindelmutter (1, 33) abgestützt ist.

2. Kugelgewindetrieb nach Anspruch 1, bei der das Kugellager als Vierpunktlager (13, 36) ausgebildet ist.

3. Kugelgewindetrieb nach Anspruch 1, bei dem die eine Lagerfläche des Axiallagers an der Stirnseite der Spindelmutter (1, 33) ausgebildet ist.

4. Kugelgewindetrieb nach Anspruch 1, bei dem die andere Lagerfläche des Axiallagers an dem Federelement (19, 28) ausgebildet ist.

5. Kugelgewindetrieb nach Anspruch 1, bei der das Axiallager durch ein Wälzlager gebildet ist, dessen Wälzkörper einerseits an einer der Spindelmutter (1, 33) zugeordneten Lagerfläche und andererseits an einer dem Federelement (19, 38) zugeordneten Lagerfläche abwälzen.

6. Kugelgewindetrieb nach Anspruch 1, bei der das Federelement (19, 28) einen tellerförmigen Federabschnitt (20, 29) aufweist, der an dem Gehäuse (14, 37) abgestützt ist.

7. Kugelgewindetrieb nach Anspruch 6, bei dem das Federelement (19, 28) einen an den tellerförmigen Federabschnitt (20, 29) vorzugsweise einstückig anschließenden Hülsenabschnitt (21, 30) aufweist, der in die Spindelmutter (1) eingreift, wobei das Federelement (19, 28) und die Spindelmutter (1) verliersicher miteinander verbunden sind.

8. Kugelgewindetrieb nach Anspruch 7, bei dem die Spindelmutter (1) an ihrem Innenumfang eine umlaufende Nut (23) und der Hülsenabschnitt (21, 30) des Federelementes (19, 28) einen radial vorspringenden Wulst (22, 31) oder mehrere über den Umfang verteilt angeordnete Nasen aufweisen, wobei der Wulst (22, 31) oder die Nasen in die umlaufende Nut (23) eingreifen.

9. Kugelgewindetrieb nach Anspruch 6, bei dem der tellerförmige Federabschnitt (20, 29) des Federelementes (19, 28) an seiner der Spindelmutter (1) zugewandten Stirnseite mit einer Lauffläche, insbesondere Kugelrille (26) versehen ist.

10. Kugelgewindetrieb nach Anspruch 1, bei dem die Spindelmutter (1, 33) und die Spindel (2, 34) jeweils mit Kugelrillen (5, 6) für die Kugeln (3) versehen sind.

11. Kugeigewindetrieb nach Anspruch 10, bei dem mehrere Kugelkanäle (4) vorgesehen sind, wobei die Kugeln (3) wenigstens eines der Kugelkanäle (4) gegen die eine Gewindeflanke der schraubenförmigen Kugelrille (6) der Spindel (2) angedrückt sind, und wobei die Kugeln (3) wenigstens eines anderen Kugelkanals (4) gegen die andere Gewindeflanke der schraubenförmigen Kugelrille (6) der Spindel (2) federelastisch angedrückt sind.

12. Kugelgewindetrieb nach Anspruch 11, bei dem die einen Kugelkanäle (4) von der einen Spindelmutter (1) und bei dem die anderen Kugelkanäle von der anderen Spindelmutter (15a) begrenzt sind.

13. Kugelgewindetrieb nach Anspruch 10, bei dem die andere Spindelmutter (15a) zu einem Hilfs-Kugelgewindetrieb (15) gehört.

14. Kugelgewindetrieb nach Anspruch 1, bei dem das Federelement (19, 28, 38) zwischen dem Gehäuse (37, 14) und der Spindelmutter (1, 33) angeordnet ist.

15. Kugelgewindetrieb nach Anspruch14, bei dem das Federelement (19, 28, 38) einerseits an dem Gehäuse (14, 37) und anderseits an der Spindelmutter (1, 33) abgestützt ist.

## Claims

1. Ball screw drive, having a spindle nut (1, 33) which is arranged rotatably on a spindle (2, 34) and having balls (3) which circulate in endless ball channels (4) which are delimited by the spindle nut (1, 33) and the spindle (2, 34), and having an anti-friction bearing, in particular a ball bearing, via which the spindle nut (1, 33) is mounted axially and radially on a housing (14, 37), an axially prestressed spring element (19, 28, 38) being provided for axial prestressing of the spindle nut (1, 33) with respect to the housing (14, 37) or a part which is fixed to the housing, **characterized in that** the spring element (19, 28, 38) is supported on the spindle nut (1, 33) via an axial bearing.

2. Ball screw drive according to Claim 1, in which the ball bearing is configured as a four-point bearing (13, 36).

3. Ball screw drive according to Claim 1, in which one bearing face of the axial bearing is formed on the end side of the spindle nut (1, 33).

4. Ball screw drive according to Claim 1, in which the other bearing face of the axial bearing is formed on the spring element (19, 28).

5. Ball screw drive according to Claim 1, in which the axial bearing is formed by an anti-friction bearing, the rolling bodies of which roll on one side on a bearing face which is assigned to the spindle nut (1, 33) and roll on the other side on a bearing face which is assigned to the spring element (19, 38).

6. Ball screw drive according to Claim 1, in which the spring element (19, 28) has a plate-shaped spring section (20, 29) which is supported on the housing (14, 37).

7. Ball screw drive according to Claim 6, in which the spring element (19, 28) has a sleeve section (21, 30) which preferably adjoins the plate-shaped spring section (20, 29) integrally and engages into the spindle nut (1), the spring element (19, 28) and the spindle nut (1) being connected to one another captively.

8. Ball screw drive according to Claim 7, in which the spindle nut (1) has a circumferential groove (23) on its inner circumference and the sleeve section (21, 30) of the spring element (19, 28) has a radially projecting bead (22, 31) or a plurality of lugs which are arranged distributed over the circumference, the bead (22, 31) or the lugs engaging into the circumferential groove (23).

9. Ball screw drive according to Claim 6, in which the plate-shaped spring section (20, 29) of the spring element (19, 28) is provided with a running face, in particular a ball groove (26), on its end side which faces the spindle nut (1).

10. Ball screw drive according to Claim 1, in which the spindle nut (1, 33) and the spindle (2, 34) are provided in each case with ball grooves (5, 6) for the balls (3).

11. Ball screw drive according to Claim 10, in which a plurality of ball channels (4) are provided, the balls (3) of at least one of the ball channels (4) being pressed against one thread flank of the helical ball groove (6) of the spindle (2), and the balls (3) of at least one other ball channel (4) being pressed resiliently against the other thread flank of the helical ball groove (6) of the spindle (2).

12. Ball screw drive according to Claim 11, in which some ball channels (4) are delimited by one spindle nut (1) and in which the other ball channels are delimited by the other spindle nut (15a).

13. Ball screw drive according to Claim 10, in which the other spindle nut (15a) belongs to an auxiliary ball screw drive (15).

14. Ball screw drive according to Claim 1, in which the spring element (19, 28, 38) is arranged between the housing (37, 14) and the spindle nut (1, 33).

15. Ball screw drive according to Claim 14, in which the spring element (19, 28, 38) is supported on one side on the housing (14, 37) and on the other side on the spindle nut (1, 33).

## Revendications

1. vis d'entraînement à bille, comprenant un écrou de broche (1, 33) disposé à rotation sur une broche (2, 34), et des billes (3), qui roulent dans des canaux de billes (4) sans fin, limités par l'écrou de broche (1, 33) et la broche (2, 34), et un palier à roulement, notamment un roulement à billes, par le biais duquel l'écrou de broche (1, 33) est monté axialement et radialement sur un boîtier (14, 37), un élément de ressort précontraint axialement (19, 28, 38) étant prévu pour une précontrainte axiale de l'écrou de broche (1, 33) par rapport au boîtier (14, 37) ou à une partie fixée au boîtier, **caractérisée en ce que** l'élément de ressort (19, 28, 38) est supporté par le biais d'un palier axial sur l'écrou de broche (1, 33).

2. Vis d'entraînement à bille selon la revendication 1, dans laquelle le roulement à billes est réalisé sous forme de roulement à quatre points (13, 36).

3. vis d'entraînement à bille selon la revendication 1, dans laquelle une surface de palier du palier axial est réalisée sur le côté frontal de l'écrou de broche (1, 33).

4. vis d'entraînement à bille selon la revendication 1, dans laquelle l'autre surface de palier du palier axial est réalisée sur l'élément de ressort (19, 28).

5. vis d'entraînement à bille selon la revendication 1, dans laquelle le palier axial est formé par un palier à roulement, dont les corps de roulement roulent d'une part sur une surface de palier associée à l'écrou de broche (1, 33) et d'autre part sur une surface de palier associée à l'élément de ressort (19, 38).

6. Vis d'entraînement à bille selon la revendication 1, dans laquelle l'élément de ressort (19, 28) présente une portion de ressort en forme de coupelle (20, 29) qui est supportée sur le boîtier (14, 37).

7. Vis d'entraînement à bille selon la revendication 6, dans laquelle l'élément de ressort (19, 28) présente une portion de douille (21, 30) se raccordant de préférence d'une seule pièce à la portion de ressort en forme de coupelle (20, 29), laquelle portion de douille vient en prise dans l'écrou de broche (1), l'élément de ressort (19, 28) et l'écrou de broche (1) étant connectés l'un à l'autre de manière imperdable.

8. Vis d'entraînement à bille selon la revendication 7, dans laquelle l'écrou de broche (1) présente, sur sa périphérie interne, une rainure périphérique (23) et la portion de douille (21, 30) de l'élément de ressort (19, 28) présente un bourrelet saillant radialement (22, 31) ou plusieurs nez disposés de manière répartie sur la périphérie, le bourrelet (22, 31) ou les nez venant en prise dans la rainure périphérique (23).

9. Vis d'entraînement à bille selon la revendication 6, dans laquelle la portion de ressort en forme de coupelle (20, 29) de l'élément de ressort (19, 28) est pourvue, sur son côté frontal tourné vers l'écrou de broche (1), d'une surface de roulement, notamment d'une rainure à billes (26).

10. Vis d'entraînement à bille selon la revendication 1, dans laquelle l'écrou de broche (1, 33) et la broche (2, 34) sont à chaque fois pourvus de rainures à billes (5, 6) pour les billes (3).

11. Vis d'entraînement à bille selon la revendication 10, dans laquelle plusieurs canaux de billes (4) sont prévus, les billes (3) d'au moins l'un des canaux de billes (4) étant pressées contre certains des flancs filetés de la rainure à billes de forme hélicoïdale (6) de la broche (2), et les billes (3) d'au moins un autre canal de billes (4) étant pressées de manière élastique à ressort contre les autres flans filetés de la rainure à billes de forme hélicoïdale (6) de la broche (2).

12. Vis d'entraînement à bille selon la revendication 11, dans laquelle certains des canaux de billes (4) sont limités par l'un des écrous de broche (1) et les autres canaux de billes sont limités par l'autre écrou de broche (15a).

13. Vis d'entraînement à bille selon la revendication 10, dans laquelle l'autre écrou de broche (15a) appartient à une vis d'entraînement à bille auxiliaire (15).

14. Vis d'entraînement à bille selon la revendication 1, dans laquelle l'élément de ressort (19, 28, 38) est disposé entre le boîtier (37, 14) et l'écrou de broche (1, 33).

15. Vis d'entraînement à bille selon la revendication 14, dans lequel l'élément de ressort (19, 28, 38) est supporté d'une part contre le boîtier (14, 37) et d'autre part contre l'écrou de broche (1, 33).
